(19) Europäisches Patentamt / European Patent Office / Office européen des brevets

(11) **EP 4 124 886 A1**

(12) **DEMANDE DE BREVET EUROPEEN**

(43) Date de publication:
**01.02.2023   Bulletin 2023/05**

(21) Numéro de dépôt: **22186571.0**

(22) Date de dépôt: **22.07.2022**

(51) Classification Internationale des Brevets (IPC):
**G01S 13/34** (2006.01)      **G01S 7/35** (2006.01)
**G01S 7/41** (2006.01)      **G01S 13/40** (2006.01)
**G01S 13/70** (2006.01)

(52) Classification Coopérative des Brevets (CPC):
**G01S 13/343; G01S 7/35; G01S 7/354;**
G01S 7/415; G01S 13/40; G01S 13/70

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité:  **29.07.2021   FR 2108255**

(71) Demandeur: **Commissariat à l'énergie atomique et aux énergies alternatives**
**75015 Paris (FR)**

(72) Inventeurs:
• **ANTIDE, Etienne**
**38054 GRENOBLE CEDEX 09 (FR)**
• **ZARUDNIEV, Mykhailo**
**38054 GRENOBLE CEDEX 09 (FR)**
• **LACHARTRE, David**
**38054 GRENOBLE CEDEX 09 (FR)**

(74) Mandataire: **Brevalex**
**Tour Trinity**
**1 Bis Esplanade de La Défense**
**CS 60347**
**92035 Paris La Défense Cedex (FR)**

(54)   **DISPOSITIF ET PROCEDE DE MESURE RADAR A DOUBLE GENERATION DE SIGNAL RADAR**

(57)    Dispositif (100) de mesure radar comportant :
- un premier générateur (107) d'un premier signal radar périodique dont la fréquence varie linéairement, sur une partie $T_{ramp}$ d'une période $T_{in}$, dans une bande de fréquences $B$ ;
- une antenne d'émission (110) couplée à une sortie du premier générateur et configurée pour émettre le premier signal radar ;
- un deuxième générateur (123) d'un deuxième signal radar périodique dont la fréquence varie linéairement, sur ladite partie $T_{ramp}$ de la période $T_{in}$, dans la bande de fréquences $B$, qui est généré avec une même phase de démarrage que le premier signal radar et présentant, par rapport au premier signal radar, un retard paramétrable $\tau_{mix}$ ;
- une antenne de réception (112) configurée pour recevoir au moins un écho du premier signal radar ;
- un mélangeur (124) comprenant une première entrée couplée à l'antenne de réception et une deuxième entrée couplée à une sortie du deuxième générateur.

FIG.3

**Description**

**DOMAINE TECHNIQUE**

L'invention concerne les applications radar, notamment à courte portée et haute résolution spatiale. L'invention concerne en particulier un dispositif de mesure radar formant une architecture système d'émetteur-récepteur radar proposant conjointement une faible consommation d'énergie, une haute résolution spatiale et un grand rapport signal sur bruit. L'invention concerne également un procédé de mesure radar mis en œuvre avec un tel dispositif.

**ÉTAT DE LA TECHNIQUE ANTÉRIEURE**

L'approche radar appelée FMCW (« Frequency Modulated Continuous Waveform ») repose sur la transmission et la réception de signaux continus modulés en fréquence. Cette technique est actuellement opposée aux approches radar de type UWB (« Ultra-Wide Band ») qui utilisent de très courtes impulsions pour générer des signaux à larges bande.

L'approche FMCW est privilégiée dans les applications du secteur automobile fonctionnant dans la bande de fréquence 77GHz, dans la reconnaissance de gestes, ou encore des applications de surveillance de rythmes respiratoires et cardiaques (signes vitaux) en raison des avantages suivants qu'elle présente :

- faible complexité de calcul, du fait que cette approche repose sur des convertisseurs à faible cadence d'échantillonnage ;
- simplicité de génération de formes d'ondes respectant un masque d'émission spectral tel qu'imposé par les standards radios.

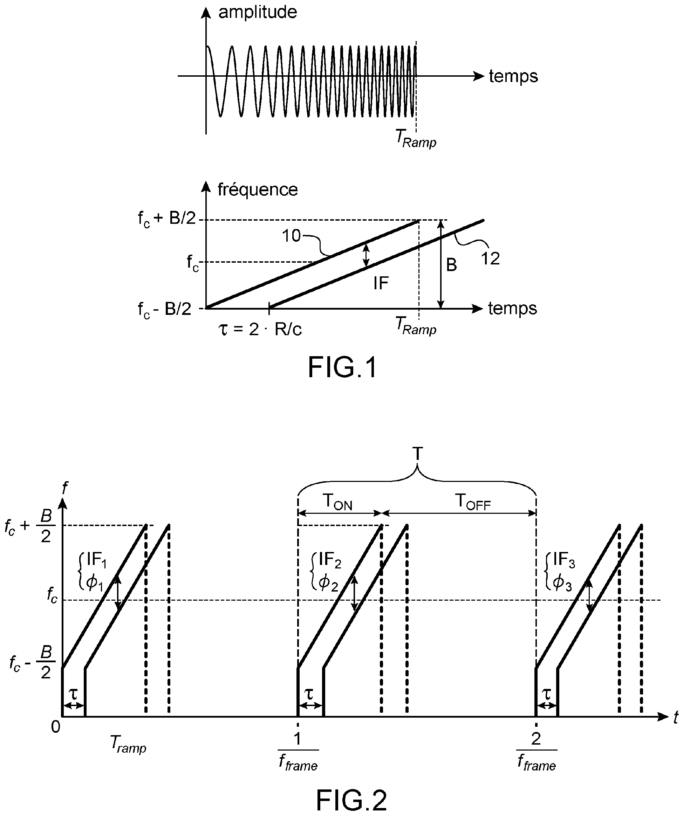

Un exemple de signal utilisé par un radar FMCW est représenté dans le domaine temporel et dans un plan temps-fréquence sur la figure 1. Un tel signal, appelé « chirp », balaie linéairement une bande de fréquences $B$, autour d'une fréquence porteuse, ou fréquence centrale, $f_c$ pendant une durée $T_{ramp}$. La capacité d'un radar FMCW à distinguer deux réflecteurs, c'est-à-dire deux éléments (objets, personnes, etc.) sur lesquels le signal radar transmis se réfléchit et qui renvoient une partie de l'énergie du signal radar transmis, par une seule observation de leur distance vis-à-vis du radar (distance appelée « range ») est appelée « résolution spatiale », notée $\Delta R$, et est liée à la valeur de la bande de fréquences B balayée par le chirp par la relation :

$$\Delta R \geq \frac{c}{2B}$$

dans laquelle « c » correspond à la vitesse de la lumière dans le vide.

Dans les applications de suivi de personnes, cette résolution spatiale ne doit pas excéder environ 10 cm afin de pouvoir distinguer des individus potentiellement proches les uns des autres, ce qui oblige à utiliser des chirps de bande de fréquences $B$ égale à plusieurs gigahertz. De telles bandes de fréquences sont autorisées par des régulations internationales gérant les allocations de spectre dans des bandes de fréquences millimétriques, contraignant ainsi le choix de fréquence porteuse $f_c$.

En fonctionnement, une distance $R$ séparant un réflecteur du radar est déterminée en mesurant un temps de vol $\tau$ du signal radar transmis, c'est-à-dire la durée qu'il a fallu à ce signal pour parcourir deux fois cette distance (un aller-retour, du radar vers le réflecteur, puis après réflexion, du réflecteur vers le radar). Ce temps de vol $\tau$ s'exprime par la relation :

$$\tau = 2R/c$$

Ainsi, pour des applications à courte portée où les distances maximales à mesurer sont de quelques dizaines de mètres au maximum, les temps de vol détectés sont de quelques centaines de nanosecondes. Par exemple, un réflecteur placé à $R$ = 15 m est associé à un temps de vol $\tau$ = 100 ns.

Le principe du radar FMCW est d'émettre des chirps dont les durées sont beaucoup plus longues par rapport aux temps de vol à mesurer, typiquement plusieurs dizaines ou centaines de microsecondes. Le radar FMCW assure simultanément les opérations de transmission de signal radar et de réception de ses échos réfléchis par les différents objets présents dans la scène mesurée par le radar. L'écart fréquentiel instantané (à un même instant t) entre le chirp transmis à t = 0 (désigné sur la figure 1 par la référence 10) et un écho reçu à t = $\tau$ (désigné sur la figure 1 par la référence 12), appelé « fréquence de battement » ou « IF », est proportionnel au retard r à mesurer. Pour détecter des valeurs de retards de quelques nanosecondes, les fréquences *IF* associées à ces retards sont mesurées dans le signal de sortie du radar. Si les chirps peuvent balayer des bandes de fréquences *B* de plusieurs gigahertz, des fréquences d'échantillonnage bien moins grandes, typiquement inférieures à 10 MHz, sont utilisées pour identifier les fréquences *IF* qui composent le signal de sortie d'un radar FMCW.

Lorsqu'un radar FMCW est utilisé pour réaliser un suivi de signes vitaux d'individus, et plus spécifiquement un suivi de leurs rythmes respiratoires et cardiaques respectifs, ces signes vitaux sont responsables de petits mouvements de leurs cages thoraciques. La distance à laquelle se trouve un sujet détecté par le radar varie avec ces mouvements de poitrine. Dans le cas d'un suivi de rythme cardiaque, la variation de distance « *dr* » à mesurer est de l'ordre de 0,5 mm à une fréquence comprise entre 1 Hz et 5 Hz. Dans le cas d'un suivi de rythme respiratoire, la variation de distance « *dr* » à mesurer est de l'ordre de 1 cm à une fréquence comprise entre 0,1 Hz et 0,5 Hz. Si la précision de mesure de distance du radar considéré n'est pas aussi fine, il est possible de détecter de telles variations de distances en comparant plusieurs mesures de distance successives. En effet, ces variations de distances *dr* induisent des variations de phase *ΔΦ* du signal de fréquence *IF* associé au sujet surveillé par la relation suivante :

$$\Delta\phi = \pm \frac{4 \cdot \pi \cdot dr \cdot f_c}{c}$$

Le principe de mesure appliqué pour ce type d'applications repose par conséquent sur la répétition de mesures de distances afin d'observer les variations de la phase des signaux de fréquences *IF* au cours du temps. Pour observer les battements de cœur d'un sujet et dater leurs occurrences à quelques millisecondes près, ces mesures de distances sont répétées à une fréquence $f_{frame}$, appelée « Frame Rate », d'environ 1 kHz.

Afin de réduire la consommation électrique du radar, il est possible d'éteindre les oscillateurs, amplificateurs et autres éléments électronique du radar entre deux mesures successives. On peut alors définir un rapport cyclique, ou « duty-cycle », $\alpha_{DC}$ du radar, comme étant le rapport entre la durée $T_{ON}$ où ce système est actif, et la durée totale $T_{ON} + T_{OFF}$ ($T_{OFF}$ correspondant à la durée pendant laquelle, entre deux mesures, le radar est éteint) séparant deux mesures, tel que :

$$\alpha_{DC} = \frac{T_{ON}}{T_{ON} + T_{OFF}} = T_{ramp} \cdot f_{frame}$$

La figure 2 représente la caractéristique f(t) (variation de la fréquence en fonction du temps) de chirps émis et reçus avec un rapport cyclique $\alpha_{DC} < 1$.

On peut noter que le terme FMCW, désignant des signaux continus modulés en fréquence, est ici utilisé pour désigner également de tels chirps ayant un rapport cyclique $\alpha_{DC} < 1$. De tels chirps sont parfois appelés « impulsions de chirps », ou « burst chirps » en anglais.

Le temps $T_{ON}$ d'activité du radar correspond au temps nécessaire pour effectuer une mesure de distance. Ce temps est égal à la durée du chirp $T_{ramp}$, temps pendant lequel les chirps transmis et reçus sont comparés pour produire le signal IF d'intérêt. Le temps $T_{OFF}$ est quant à lui déterminé par la valeur de $f_{frame}$, c'est-à-dire la cadence à laquelle les mesures sont répétées. La valeur de $f_{frame}$ est déterminée par l'application, et dépendra de la nature des phénomènes à observer. Etant donné que la valeur de $f_{frame}$ est déterminée par l'application visée, une réduction du rapport cyclique $\alpha_{DC}$ du système, et donc une réduction de sa consommation globale d'énergie, passe par une réduction de la durée des chirps $T_{ramp}$. La somme des durées $T_{ON}$ et $T_{OFF}$ est égale à la période *T* du chirp émis.

Afin de bénéficier d'une bonne dynamique de variation de phase *ΔΦ* ainsi que pour pouvoir utiliser des larges bandes de fréquences *B*, les fréquences porteuses $f_c$ des signaux utilisés se situent en bande millimétrique, c'est-à-dire entre environ 30 GHz et 300 GHz. Cette montée en fréquence implique néanmoins que ces signaux seront fortement atténués au cours de leur propagation dans l'espace. De très faibles puissances reçues, et par conséquent de faibles rapports signal sur bruit (SNR, pour « Signal to Noise Ratio » en anglais) sont donc attendus. Les probabilités de détection d'un signal radar étant dépendantes du SNR, il est important d'avoir une bonne maîtrise du SNR pour assurer de bonnes performances de détection à de telles fréquences porteuses. C'est par ailleurs à partir de ce même SNR que la distance maximale détectable par le radar est définie, ce qui justifie le besoin d'un SNR de valeur suffisante.

Les chirps sont habituellement générés à l'aide de boucles à verrouillage de phase (PLL ou « Phase-Locked Loop » en anglais), qui permettent de contrôler le balayage en fréquence d'un oscillateur contrôlé en tension (VCO ou « Voltage Controlled Oscillator » en anglais) ou d'un oscillateur commandé numériquement (DCO ou « Digitally Controlled Oscillator » en anglais). Un chirp ainsi généré est ensuite multiplié en fréquence, pour permettre d'obtenir un chirp de bande *B* centrée autour de la fréquence porteuse $f_c$ désirée. Cependant, les opérations successives de multiplication fréquentielle vont également augmenter le bruit de phase du signal multiplié, ce qui aura un impact négatif sur la qualité des signaux radars, et donc sur le SNR. Aussi, les facteurs de multiplication considérés sont généralement inférieurs à 10 pour se placer dans la bande millimétrique visée. C'est pourquoi la courte durée d'un chirp est conditionnée généralement par les valeurs maximales de pente de rampe en fréquences, désignées par la variable $\alpha$ et dont la valeur s'exprime en MHz/$\mu$s, atteignables en sortie de PLL. De plus, des compromis sont à considérer entre la valeur de la pente $\alpha$, la linéarité de la rampe de fréquence (qui assure des valeurs de fréquences *IF* constantes et qui est donc liée à la précision de la mesure de distance réalisée), et la consommation.

De plus, une réduction de la durée des chirps pour balayer une bande B donnée aura, avec une architecture classique de radar FMCW, deux impacts négatifs majeurs.

Premièrement, les valeurs des fréquences *IF* que l'on va chercher à mesurer pour en déduire des distances parcourues par les échos du chirps émis dépendent de la durée *Tramp.* Réduire cette durée va augmenter les valeurs des fréquences *IF* associées aux différentes distances $R_k$ mesurées (correspondant aux distances des différents réflecteurs vis-à-vis du radar). Cela implique d'observer les signaux de sortie du radar sur de plus larges bandes d'acquisition, ce qui demanderait d'utiliser des convertisseurs analogique-numérique à très grande cadence d'échantillonnage (plusieurs centaines de MHz), qui sont des éléments coûteux et à forte consommation d'énergie. Le bruit blanc thermique serait quant à lui observé et intégré sur une large bande d'observation, entrainant de fort niveaux de bruits et donc de mauvais SNR.

Deuxièmement, les signaux IF ont une durée limitée dans le temps. Si la durée du chirp diminue suffisamment pour être du même ordre de grandeur que celui des temps de vol $\tau_k$ (temps de vols des différents échos reçus), ce qui serait le cas en utilisant par exemple un chirp avec $T_{ramp} \leq 1$ $\mu$s pour mesurer des retards allant jusqu'à 100 ns (pour des objets situés à une distance de 15 m), alors des effets de fenêtrage temporel, réduisant la durée de coexistence des signaux émis et des échos reçus, doivent être pris en compte. Le simple fait de choisir d'utiliser des chirps de courte durée $T_{ramp}$ devant les temps de vol $\tau_k$ à détecter avec un schéma classique de réception FMCW induira des effets de fenêtrage qui viendront détériorer les signaux *IF* en sortie du radar. Il est important de souligner que ces effets sont indépendants de l'atténuation due à la propagation des ondes électromagnétiques, mais sont les conséquences du processus de réception des signaux, et plus précisément de l'étape de mélange analogique mise en œuvre à la réception. Le fenêtrage temporel provoque une atténuation supplémentaire des puissances des signaux *IF* associées aux cibles les plus éloignées du radar, ce qui résulte en une dégradation non négligeable de leur SNR. L'énergie disponible est alors insuffisante pour réaliser la mesure souhaitée.

## EXPOSÉ DE L'INVENTION

Un but de la présente invention est de proposer un dispositif de mesure radar fonctionnant en bande millimétrique, à basse consommation et haut rapport signal/bruit, fonctionnant avec des signaux radar de très courte durée et de large bande de fréquences.

Pour cela, la présente invention propose un dispositif de mesure radar comportant au moins :

-  un premier générateur d'un premier signal radar périodique dont la fréquence varie linéairement, sur au moins une partie $T_{ramp}$ d'une période $T_{in}$, dans une bande de fréquences *B*, correspondant à un premier chirp ;
-  une antenne d'émission couplée à une sortie du premier générateur et configurée pour émettre le premier signal radar ;
-  un deuxième générateur d'un deuxième signal radar périodique dont la fréquence varie linéairement, sur ladite partie $T_{ramp}$ de la période $T_{in}$, dans la bande de fréquences *B*, qui est généré avec une phase constante ou une même phase de démarrage, ou même phase initiale, que le premier signal radar et présentant, par rapport au premier signal radar, un retard paramétrable $\tau_{mix}$ ;
-  une antenne de réception configurée pour recevoir au moins un écho du premier signal radar ;
-  un mélangeur comprenant une première entrée couplée à l'antenne de réception, une deuxième entrée couplée à une sortie du deuxième générateur.

Ce dispositif de mesure radar propose de générer et utiliser deux signaux radar distincts pour réaliser des mesures. Le premier signal radar est émis par le dispositif de mesure. Le deuxième signal radar généré est similaire au premier signal radar mais est généré après un retard $\tau_{mix}$ paramétrable. C'est ce deuxième signal radar qui est mélangé avec le ou les échos reçus au niveau de l'antenne de réception du dispositif radar.

Avec une telle configuration, de bonnes valeurs de SNR sont conservées tout en permettant un bon fonctionnement avec un faible rapport cyclique des signaux radar générés car l'utilisation d'un deuxième signal radar retardé distinct du premier signal radar permet au dispositif permet d'éviter les effets de fenêtrage temporel se produisant dans un dispositif radar FMCW classique. Ce dispositif permet un fonctionnement avec une faible consommation électrique sans que cela soit préjudiciable à la qualité de détection obtenue.

Le choix de la valeur du retard $\tau_{mix}$ permet de focaliser l'observation réalisée par le dispositif de mesure radar sur une plage de distance souhaitée.

Par exemple, pour bénéficier d'un bon compromis entre le besoin d'une haute fréquence porteuse et celui de limiter l'atténuation qui s'accentue avec la montée en fréquence, le dispositif peut générer des premier et deuxième signaux radar dans la bande millimétrique avec une fréquence porteuse $f_c$ élevée, comprise entre 30 GHz et 60 GHz et par exemple égale à 60 GHz, autorisée pour les applications radar à courte portée, et balayant une bande de fréquences B importante, par exemple égale à 7 GHz.

Ce dispositif permet un fonctionnement avec des signaux radar ayant de faibles valeurs de $T_{ramp}$, par exemple inférieures ou égales à 1 $\mu$s. Ce dispositif permet de tirer parti des gains en consommation que permet l'usage de tels chirps à courte durée de rampe tout en s'affranchissant des effets fenêtrages, ainsi qu'en évitant une trop grande augmentation des fréquences IF.

Pour des applications de suivi d'individus à courte distance, par exemple le suivi de signes vitaux de ces individus, les rapports cycliques permis par l'architecture selon l'invention sont bien inférieurs à ceux accessibles par des architectures de l'état de l'art. Ces bas rapports cycliques sont qui plus est atteints dans un système à faible bande d'acquisition (et donc à SNR élevé) et haute bande passante, proposant ainsi conjointement des propriétés de basse consommation d'énergie, de haut SNR et de haute résolution spatiale.

Etant donné que le deuxième signal radar est généré avec une même phase de démarrage que le premier signal radar, la phase $\phi_1$ du premier signal $s1 = e^{j\phi_1(t)}$ est telle que $\Phi_1(t) = \phi_2(t - \tau_{mix})$, avec la phase $\phi_2$ du deuxième signal $s2 = e^{j\phi_2(t)}$. Cette caractéristique du dispositif de mesure radar est particulièrement avantageuse lorsque le dispositif de mesure radar est utilisé pour réaliser des mesures successives afin de déterminer un déphasage ou une discontinuité de phase dans les résultats de mesure successifs obtenus, et déterminer une très faible distance à partir de cette différence de phase, comme par exemple lorsque le dispositif de mesure radar est utilisé pour suivre un rythme cardiaque ou un rythme respiratoire. Cela est également obtenu en générant le deuxième signal radar avec une phase constante.

Selon un premier mode de réalisation, le dispositif de mesure radar peut être tel que :

- le premier générateur comporte un premier modulateur polaire configuré pour recevoir sur une première entrée un premier signal périodique destiné à être modulé en fréquence, sur une deuxième entrée un premier signal de commande comprenant une suite numérique d'échantillons de fréquences, sur une troisième entrée un signal d'horloge, et pour réaliser une modulation du premier signal périodique par le premier signal de commande à la fréquence du signal d'horloge ;
- le deuxième générateur comporte un deuxième modulateur polaire configuré pour recevoir sur une première entrée le premier signal périodique destiné à être modulé en fréquence, sur une deuxième entrée un deuxième signal de commande comprenant ladite suite numérique d'échantillons de fréquences retardés du retard paramétrable $\tau_{mix}$ égal à un nombre entier de périodes du signal d'horloge, sur une troisième entrée le signal d'horloge, et pour réaliser une modulation du premier signal périodique par le deuxième signal de commande à la fréquence du signal d'horloge.

Selon un deuxième mode de réalisation, le dispositif de mesure radar peut être tel que :

- le premier générateur comporte un premier modulateur cartésien configuré pour recevoir sur une première entrée un premier signal périodique destiné à être modulé en fréquence, sur une deuxième entrée un deuxième signal périodique destiné à être modulé en fréquence et en quadrature avec le premier signal périodique, sur une troisième entrée un premier signal de commande comprenant une première suite numérique d'échantillons de fréquences, sur une quatrième entrée un deuxième signal de commande comprenant une deuxième suite numérique d'échantillons de fréquences, sur une cinquième entrée un signal d'horloge, et pour réaliser une modulation des premier et deuxième signaux périodiques respectivement par les premier et deuxième signaux de commande à la fréquence du signal d'horloge ;
- le deuxième générateur comporte un deuxième modulateur cartésien configuré pour recevoir sur une première entrée le premier signal périodique destiné à être modulé en fréquence, sur une deuxième entrée le deuxième signal périodique destiné à être modulé en fréquence et en quadrature avec le premier signal périodique, sur une troisième entrée un troisième signal de commande comprenant la première suite numérique d'échantillons de fréquences retardés du retard paramétrable $\tau_{mix}$ égal à un nombre entier de périodes du signal d'horloge, sur une quatrième entrée un quatrième signal de commande comprenant la deuxième suite numérique d'échantillons de fréquences retardés du retard paramétrable $\tau_{mix}$, sur une cinquième entrée le signal d'horloge, et pour réaliser une modulation des premier et deuxième signaux périodiques respectivement par les troisième et quatrième signaux de commande à la fréquence du signal d'horloge.

Un avantage du premier mode de réalisation est qu'il peut ne faire appel qu'à un seul élément de synthèse de fréquences.

Une sortie du premier modulateur (polaire ou cartésien) peut être couplée à une entrée d'un premier multiplieur de fréquence, le premier signal radar correspondant au signal destiné à être délivré en sortie du premier multiplieur de fréquence, et une sortie du deuxième modulateur (polaire ou cartésien) peut être couplée à une entrée d'un deuxième multiplieur de fréquence, le deuxième signal radar correspondant au signal destiné à être délivré en sortie du deuxième multiplieur de fréquence.

Le dispositif de mesure radar peut comporter en outre, couplé à une sortie du mélangeur, un filtre passe haut couplé en série à un filtre à gain et fréquence de coupure variables.

Le dispositif de mesure radar peut comporter en outre un convertisseur analogique - numérique comprenant une entrée couplée à une sortie du filtre à gain et fréquence de coupure variables.

L'invention concerne également un procédé de mesure radar mis en œuvre avec au moins un dispositif de mesure radar selon l'invention, comportant au moins :

- choix d'une première valeur du retard paramétrable $\tau_{mix}$, d'une première valeur $B_1$ de la bande de fréquences B et d'une première valeur de $T_{ramp}$;
- première mesure radar mise en œuvre avec le dispositif de mesure radar configuré avec la première valeur du retard paramétrable $\tau_{mix}$ et la première valeur $B_1$.

La première valeur du retard paramétrable $\tau_{mix}$ peut être égale à 0, et/ou la première valeur $B_1$ peut être comprise entre 200 MHz et 2 GHz, et/ou dans lequel la première valeur de $T_{ramp}$ est comprise entre 1 $\mu$s et 10 $\mu$s.

Le procédé peut comporter en outre, après la mise en œuvre de la première mesure radar :

- mesure, dans le spectre du signal de sortie du dispositif de mesure radar obtenu lors de la première mesure radar, d'un ou plusieurs pics de fréquence $f_{IF,k}$, $k$ étant un nombre entier supérieur ou égal à 1, chacun représentatif de la présence d'au moins un réflecteur à une distance donnée vis-à-vis du dispositif de mesure radar ;
- calcul, pour le ou chacun des pics de fréquence $f_{IF,k}$, d'une estimation $\widehat{R_k}$ de ladite distance donnée selon l'équation

$$\widehat{R_k} = -\frac{f_{IF,k}.T_{ramp}}{B_1} \cdot \frac{c}{2}$$

, avec c correspondant à la vitesse de la lumière dans le vide ;
- choix d'une deuxième valeur $B_2 > B_1$ de la bande de fréquences $B$ ;
- calcul d'une ou plusieurs deuxièmes valeurs $\tau_{mix,k}$ du retard paramétrable $\tau_{mix}$ selon l'équation

$$\tau_{mix,k} = \frac{2\widehat{R_k}}{c} - \frac{1}{2B_2}$$
;
- une ou plusieurs deuxièmes mesures radar chacune mise en œuvre avec le dispositif de mesure radar configuré avec la ou l'une des deuxièmes valeurs $\tau_{mix,k}$ et la deuxième valeur $B_2$.

Il est possible que les deuxièmes mesures radar soient mises en œuvre avec une deuxième valeur de $T_{ramp}$ différente de la première valeur de $T_{ramp}$ utilisée lors de la première mesure radar. Cette deuxième valeur de $T_{ramp}$ peut être comprise entre 1 $\mu$s et 10 $\mu$s.

Le dispositif de mesure radar est dans ce cas utilisé avec une approche adaptative, et opère des séquences de mesures pour se focaliser sur les réflecteurs présents. Il est adapté à l'analyse de l'évolution de la phase des signaux radar, et permet donc d'adresser des applications de détection et de suivi à courte portée.

La deuxième valeur $B_2$ peut être comprise entre 2 GHz et 4 GHz.

Le dispositif de mesure radar peut comporter en outre, après la mise en œuvre de la ou des deuxièmes mesures radar :

- mesure, dans le spectre du ou de chaque signal de sortie du dispositif de mesure radar obtenu lors de la ou de chacune des deuxièmes mesures radar, d'un ou plusieurs pics de fréquence $f_{IF,k}$ ;
- calcul, pour le ou chacun des pics de fréquence $f_{IF,k}$, d'une estimation $\widehat{R_k}$ de ladite distance donnée selon l'équation

$$\widehat{R_k} = -\frac{f_{IF,k}.T_{ramp}}{B_2} \cdot \frac{c}{2}$$
.
- choix d'une troisième valeur $B_3 > B_2$ de la bande de fréquences $B$;
- calcul d'une ou plusieurs troisièmes valeurs de retards $\tau_{mix,k}$ du retard paramétrable $\tau_{mix}$ selon l'équation

$$\tau_{mix,k} = \frac{2\widehat{R_k}}{c} - \frac{1}{2B_3}$$
;

- une ou plusieurs troisièmes mesures radar chacune mise en œuvre avec le dispositif de mesure radar configuré avec la ou l'une des troisièmes valeurs de retard $\tau_{mix,k}$ et la troisième valeur $B_3$.

Il est possible que les troisièmes mesures radar soient mises en œuvre avec une troisième valeur de $T_{ramp}$ différente de la première valeur de $T_{ramp}$ utilisée lors de la première mesure radar et/ou différente de la deuxième valeur de $T_{ramp}$ utilisée lors de la ou des deuxièmes mesures radar. Cette troisième valeur de $T_{ramp}$ peut être comprise entre 1 μs et 10 μs.

La troisième valeur $B_3$ peut être comprise entre 4 GHz et 6 GHz.

La ou les deuxièmes mesures radar, ou la ou les troisièmes mesures radar, peuvent être répétées à une fréquence comprise entre 1 Hz et 5 Hz dans le cas d'un procédé mise en œuvre pour suivre un rythme cardiaque, ou comprise entre 0,1 Hz et 0,5 Hz dans le cas d'un procédé mis en œuvre pour suivre un rythme respiratoire.

## BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :

- la figure 1 représente un exemple de signal utilisé par un radar FMCW ;
- la figure 2 représente la caractéristique f(t) de chirps émis et reçus avec un rapport cyclique $\alpha_{DC} < 1$ ;
- la figure 3 représente schématiquement un dispositif de mesure radar selon l'invention ;
- la figure 4 représente les caractéristiques f(t) de chirps utilisés dans le dispositif de mesure radar selon l'invention;
- les figures 5 et 6 représentent des exemples de réalisation du dispositif de mesure radar selon l'invention;
- la figure 7 représente un schéma de fonctionnement d'un modulateur cartésien ;
- la figure 8 représente un signal de sortie obtenu lors d'une première mesure radar mise en œuvre par le dispositif 100 ;
- la figure 9 représente des signaux de sortie obtenus lors de deuxièmes mesures radar mises en œuvre par le dispositif 100 ;
- la figure 10 représente des signaux de sortie obtenus lors de troisièmes mesures radar mises en œuvre par le dispositif 100 ;
- la figure 11 représente les SNR obtenus pour plusieurs étapes de mesure mises en œuvre par le dispositif 100.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

## EXPOSÉ DÉTAILLÉ DE MODES DE RÉALISATION PARTICULIERS

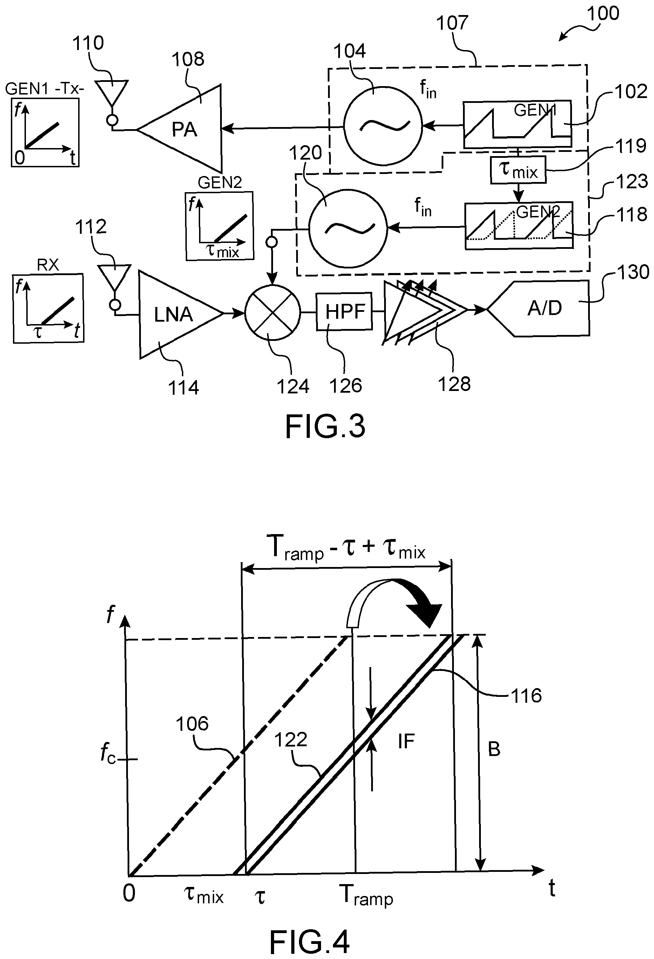

Un dispositif 100 de mesure radar selon l'invention est décrit ci-dessous en lien avec la figure 3.

Le dispositif 100 comporte un premier générateur 102 d'une première tension de commande périodique de fréquence $f_{in}$. Sur chaque période $T_{in} = 1/f_{in}$ de cette première tension de commande, son amplitude varie, sur une durée non nulle $T_{ON} < T_{in}$, linéairement entre deux valeurs différentes. Cette caractéristique de cette première tension de commande va définir le rapport cyclique $\alpha_{DC}$ du radar tel que :

$$\alpha_{DC} = \frac{T_{ON}}{T_{in}} = T_{ramp} \cdot f_{frame}$$

Le dispositif 100 comporte en outre un premier oscillateur 104 recevant en entrée la première tension de commande délivrée par le premier générateur 102. Le premier oscillateur 104 délivre en sortie un premier signal radar de type chirp balayant linéairement une bande de fréquence B autour d'une fréquence porteuse $f_c$ pendant la durée $T_{ramp}$. La caractéristique f(t) de ce premier signal radar est représentée sur la figure 4 et est désignée par la référence 106.

Le premier générateur 102 et le premier oscillateur 104 forment ensemble un premier générateur 107 d'un premier signal radar périodique dont la fréquence varie linéairement, sur la partie $T_{ramp}$ de la période $T_{in}$, dans la bande de fréquences B.

Le dispositif 100 comporte également un amplificateur de puissance 108 recevant en entrée le premier signal radar, et dont une sortie est couplée à une antenne d'émission 110 du dispositif 100.

Les éléments 102, 104, 108 et 110 forment la partie émission, ou transmission, du signal radar du dispositif 100.

Le dispositif 100 comporte également une antenne de réception 112 dont la sortie est couplée à une entrée d'un amplificateur faible bruit 114 (ou LNA pour « Low Noise Amplifier » en anglais). L'antenne de réception 112 est destinée à capter les échos des chirps émis depuis l'antenne d'émission 110 et qui se sont réfléchis sur les réflecteurs présents dans la scène observée par le dispositif 100. La caractéristique f(t) de l'un de ces échos reçu par l'antenne de réception 112 après un temps de vol $\tau$ est représentée sur la figure 4 et désignée par la référence 116.

Le dispositif 100 comporte également un deuxième générateur 118 d'une deuxième tension de commande périodique ayant des caractéristiques (fréquence $f_{in}$, amplitude, durée $T_{ON}$) similaires à celles de la première tension de commande générée par le premier générateur 102, mais retardée d'une valeur de retard $\tau_{mix}$. La valeur du retard $\tau_{mix}$ est paramétrable. Sur la figure 4, le retard $\tau_{mix}$ est représenté symboliquement par un élément référencé 119

Le dispositif 100 comporte en outre un deuxième oscillateur 120 recevant en entrée la deuxième tension de commande délivrée par le deuxième générateur 118. Le deuxième oscillateur 120 délivre en sorti un deuxième signal radar de type chirp balayant linéairement la bande de fréquence $B$ autour de la fréquence porteuse $f_c$ pendant la durée $T_{ramp}$. La caractéristique f(t) de ce deuxième signal radar est représentée sur la figure 4 et est désignée par la référence 122.

Le deuxième générateur 118 et le deuxième oscillateur 120 forment ensemble un deuxième générateur 123 d'un deuxième signal radar périodique dont la fréquence varie linéairement, sur la partie $T_{ramp}$ de la période $T_{in}$, dans la bande de fréquences $B$, qui est généré avec la même phase initiale, ou même phase de démarrage, que le premier signal radar et qui présente, par rapport au premier signal radar, le retard $\tau_{mix}$.

Le dispositif 100 comporte en outre un mélangeur 124 comprenant une première entrée couplée à la sortie de l'amplificateur faible bruit 114 et une deuxième entrée sur laquelle est appliqué le deuxième signal radar délivré en sortie du deuxième oscillateur 120.

Le dispositif 100 comporte également un filtre passe-haut 126 comprenant une entrée couplée à la sortie du mélangeur 124. Les paramètres de filtrage du filtre 126 sont réglables.

Le dispositif 100 comporte également un filtre 128 à gain et fréquence de coupure variables (ou AGC pour « Automatic Gain Control » en anglais), ou filtre anti-repliement, comprenant une entrée couplée à la sortie du filtre passe-haut 126.

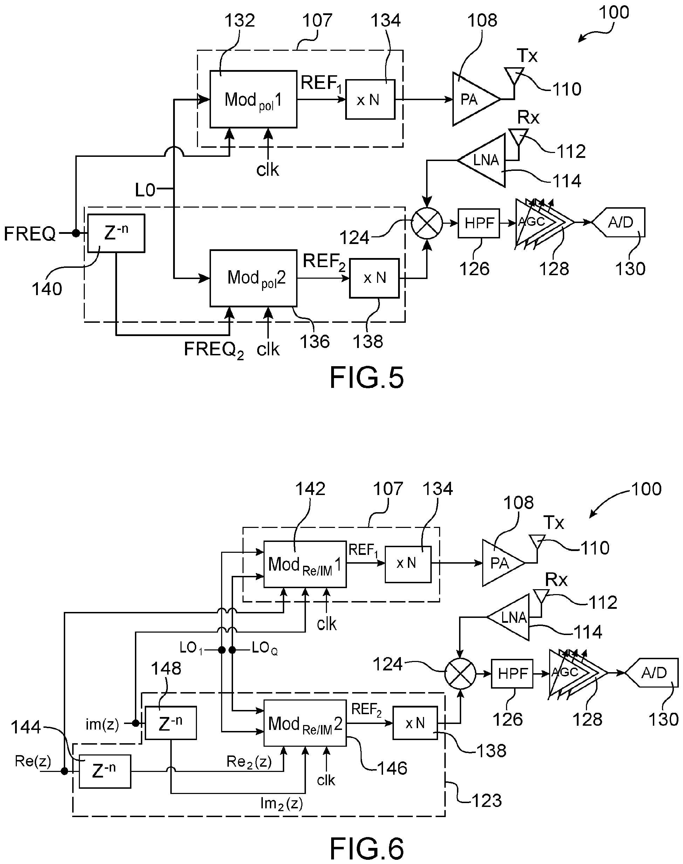

Ces filtres 126, 128 sont configurés pour sélectionner ensemble une bande d'acquisition comprenant les fréquences *IF* désirées. Le filtre 128 permet notamment d'atténuer les trop grandes valeurs de fréquences *IF*, qui correspondent à des réflecteurs situés en dehors de la fenêtre d'observation. En outre, les filtres 126, 128 permettent aussi de filtrer le bruit situé en dehors de la bande de fréquences d'intérêt, pour limiter son impact sur le signal échantillonné ensuite par un convertisseur analogique - numérique 130 (ou ADC pour « Analog Digital Converter » en anglais) comprenant une entrée couplée à la sortie du filtre 128. La sortie du convertisseur 130 forme la sortie du dispositif 100. A titre d'exemple, les filtres 126 et 128 peuvent être réalisés comme décrit dans le document D. Guermandi et al., "A 79GHz 2x2 MIMO PMCW radar SoC in 28nm CMOS," 2016 IEEE Asian Solid-State Circuits Conférence (A-SSCC), 2016, pp. 105-108, doi: 10.1109/ASSCC.2016.7844146, et plus spécialement comme sur la figure 6 de ce document.

Les éléments 112, 114, 118, 120, 124, 126, 128 et 130 forment la partie réception du dispositif 100.

Ainsi, le dispositif 100 comporte une architecture adaptative dans laquelle, plutôt que d'utiliser comme référence, dans la partie réception, le premier signal radar utilisé à la transmission, l'opération de mélange analogique est réalisée dans le mélangeur 124 avec un deuxième signal radar identique au premier signal radar transmis (en termes de fréquence, de phase initiale et de durée) mais généré après un retard $\tau_{mix}$ paramétrable.

Dans ce dispositif 100, le signal obtenu en sortie du mélangeur 124 peut s'exprimer par l'équation :

$$x_{mix}(t) = V.\exp\left(2j\pi\left(f_c \cdot (\tau_{mix} - \tau) + \frac{B}{2 \cdot T_{ramp}}(\tau^2 - \tau_{mix}^2) - \frac{B}{T_{ramp}} \cdot (\tau - \tau_{mix}) \cdot t\right)\right)$$

$$\cdot \text{rect}\left(\frac{t - \dfrac{T_{ramp} + \tau + \tau_{mix}}{2}}{T_{ramp} + \tau_{mix} - \tau}\right)$$

avec $\sqrt{V}$ correspondant à l'amplitude en volts de chacun des premier et deuxième signaux radar, $f_c$ la fréquence porteuse des premier et deuxième signaux radar, et r la valeur du temps de vol du signal écho reçu par le dispositif 100. La fonction $x \rightarrow \text{rect}(x/T)$ représente la fonction porte, qui vaut 1 pour toute valeur de $x \in [-T_{in}/2; T_{in}/2]$ et 0 pour les autres valeurs de *x*.

A titre de comparaison, le signal obtenu en sortie d'un mélangeur d'un dispositif de mesure radar FMCW classique peut s'exprimer par la relation :

$$x_{mix}(t) = V \cdot \exp\left(2j\pi\left(-f_0 \cdot \tau + \frac{B}{2 \cdot T_{ramp}}\tau - \frac{B}{T_{ramp}} \cdot \tau \cdot t\right)\right) \cdot \mathrm{rect}\left(\frac{t - \dfrac{T_{ramp} + \tau}{2}}{T_{ramp} - \tau}\right)$$

avec $f_0$ correspondant à la fréquence initiale du signal radar FMCW généré et égale à $f_c$ - $B/2$.

Dans le dispositif 100, les deux signaux radar générés ont les mêmes phases initiales. En effet, des phases initiales non maîtrisées et aléatoires rendraient la lecture de phase des signaux *IF* impossible à interpréter. Pour assurer cette cohérence de phase entre les premier et deuxième signaux radar générés, le dispositif 100 peut par exemple faire appel à un système à double modulation.

La figure 5 représente un premier exemple de réalisation du dispositif 100 faisant appel à un système à double modulation.

Dans ce premier exemple de réalisation, le premier générateur 107 est formé par un premier modulateur polaire 132 et un premier multiplieur de fréquence 134. Le premier modulateur polaire 132 reçoit en entrée un signal d'horloge *clk*, un signal de commande *FREQ* et un signal périodique *LO*. La sortie du premier modulateur polaire 132, sur lequel un signal $REF_1$ est délivré, est couplée électriquement à l'entrée du premier multiplieur de fréquence 134. La sortie du premier multiplieur de fréquence 134 est couplée à l'entrée de l'amplificateur de puissance 108.

En outre, dans ce premier exemple de réalisation, le deuxième générateur 123 est formé par un deuxième modulateur polaire 136, un deuxième multiplieur de fréquence 138 et un circuit de retard 140. Le deuxième modulateur polaire 136 reçoit en entrée le signal d'horloge *clk*, un signal de commande $FREQ_2$ correspondant au signal de commande *FREQ* auquel le retard $\tau_{mix}$ est appliqué, et le signal périodique *LO*. La sortie du deuxième modulateur polaire 136, sur lequel un signal $REF_2$ est délivré, est couplée électriquement à l'entrée du deuxième multiplieur de fréquence 138. La sortie du deuxième multiplieur de fréquence 138 est couplée à l'entrée du mélangeur 124.

A titre d'exemple, les premier et deuxième modulateurs polaires 132, 136 peuvent être similaires à celui proposé dans le document FR 3 100 404 A1.

Le signal périodique *LO* correspond à un signal de fréquence $f_{REF}$ généré par exemple par un oscillateur local (non visible sur la figure 5) du dispositif 100. Le premier modulateur polaire 132 va moduler le signal périodique *LO* à partir du signal de commande *FREQ*, sous la forme d'une suite d'échantillons de fréquence, correspondant au signal $REF_1$. Le signal de commande *FREQ* est fourni au premier modulateur 132 au rythme du signal d'horloge *clk* de fréquence $f_{clk}$. Le signal $REF_1$ délivré en sortie du premier modulateur polaire 132 correspond à un signal carré dont la fréquence augmente linéairement avec le temps pour balayer une bande de fréquence $B_{REF}$ de fréquence centrale $f_{REF}$.

Le deuxième modulateur polaire 136 reçoit en entrée les mêmes échantillons de fréquence que le premier modulateur polaire 132 mais retardés, par le circuit de retard 140, d'un nombre paramétrable *n* de périodes du signal horloge *clk*. Cette nouvelle séquence d'échantillons de fréquence correspond au signal de commande $FREQ_2$. Le signal $REF_2$ délivré en sortie du deuxième modulateur polaire 136 est similaire au signal $REF_1$, c'est-à-dire balaie la bande de fréquence $B_{REF}$ centrée sur la fréquence $f_{REF}$, mais est retardé d'une valeur arbitrairement choisie $\tau_{mix} = n/f_{REF}$.

Chacun de ces deux signaux $REF_1$ et $REF_2$ voient leurs fréquences multipliées d'une même valeur *N* par les premier et deuxième multiplieurs de fréquence 134, 138. Afin d'obtenir de faibles valeurs de *Tramp*, la valeur du facteur de multiplication N est avantageusement supérieure à 10. De manière avantageuse, les premier et deuxième multiplieurs de fréquence 134, 138 peuvent être similaires à celui proposé dans le document FR 3 086 132 A1 qui permet d'obtenir des facteurs de multiplication pouvant être compris entre 25 et 30. Les signaux obtenus en sortie des multiplieurs de fréquence 134, 138 peuvent correspondre à des signaux sinusoïdaux à modulation linéaire de fréquence et à phase initiale maîtrisée, de fréquence centrale $f_c = N.f_{REF}$ et balayant la bande de fréquence $B = N.B_{REF}$.

Le dispositif 100 forme ainsi une architecture à deux circuits de génération de chirps courts à phase initiale maîtrisée.

La figure 6 représente un deuxième exemple de réalisation du dispositif 100 selon le mode de réalisation particulier décrit précédemment.

Dans ce deuxième exemple de réalisation, le dispositif 100 comporte deux modulateurs cartésiens 142, 146 en lieu et place des modulateurs polaires 132, 136 du premier exemple de réalisation. Ces modulateurs 142, 146 reçoivent en entrées deux signaux périodiques $LO_I$ et $LO_Q$ de fréquence $f_{REF}$ et déphasés de 90° l'un par rapport à l'autre. Le signal $LO_Q$ est en retard de phase par rapport au signal $LO_I$. Ces signaux correspondent aux parties réelles (I) et imaginaires (Q) d'un signal complexe à réaliser. Chaque modulateur cartésien 142, 146 reçoit en plus en entrée le signal d'horloge *clk* ainsi que des signaux de commande numérique de modulation *Re(z)* et *Im(z)* pour le premier modulateur cartésien 142, et des signaux de commande numérique de modulation $Re_2(z)$ et $Im_2(z)$ pour le deuxième modulateur cartésien 146. Les signaux de commande numérique de modulation $Re_2(z)$ et $Im_2(z)$ sont similaires aux signaux Re(z) et *Im(z)* mais retardés, par des circuits de retard 144 et 148, d'un nombre paramétrable *n* de périodes du signal horloge *clk* correspondant au retard $\tau_{mix}$. Ces entrées numériques, cadencées à la fréquence du signal d'horloge $f_{clk}$, contiennent les échantillons des modulations à effectuer sur les parties réelles et imaginaires $LO_I$ et $LO_Q$ sous la forme de nombres complexes.

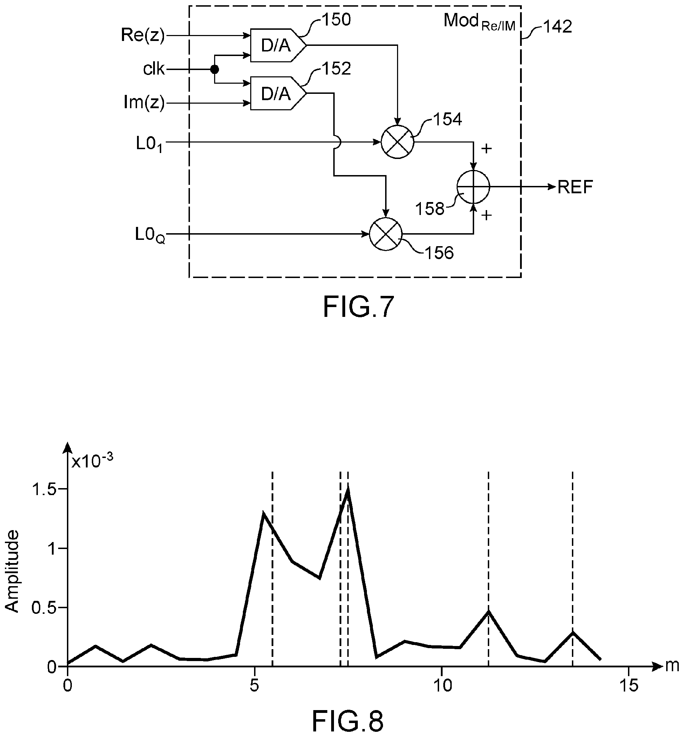

Un schéma de fonctionnement d'un tel modulateur cartésien est représenté sur la figure 7. Sur l'exemple de la figure 7, le modulateur cartésien va convertir ces commandes numériques en signaux analogiques à l'aide de convertisseurs numérique-analogique 150, 152 et réaliser un mélange analogique pour moduler indépendamment $LO_I$ et $LO_Q$ avec chacun des signaux analogiques obtenus en sortie des convertisseurs 150, 152, grâce à des mélangeurs 154, 156. Ces deux signaux modulés sont ensuite additionnés par un additionneur 158 pour obtenir le signal complexe modulé souhaité qui constitue finalement le signal de sortie du modulateur cartésien.

Le premier modulateur cartésien 142 sert à générer le premier signal radar destiné à être émis par le dispositif 100. Le signal $REF_1$ fourni en sortie du premier modulateur cartésien 142 est identique à celui délivré par le premier modulateur polaire 132, et le signal $REF_2$ fourni en sortie du deuxième modulateur cartésien 146 est identique à celui délivré par le deuxième modulateur polaire 136.

Les deux exemples de réalisation décrits ci-dessus forment des systèmes à modulation directe qui sont avantageux par rapport aux systèmes de type oscillateurs à boucle fermée (PLL) qui subissent un temps d'établissement ne permettant pas de maîtriser la trajectoire de phase. Dans les deux exemples de réalisation précédemment décrits, la modulation réalisée en boucle ouverte à partir d'une horloge commune (*clk*) rend cette solution insensible à la variation des conditions initiales.

Comme cela est visible sur la figure 4, réaliser un mélange des échos reçus avec un chirp retardé de $\tau_{mix}$ plutôt qu'avec le chirp transmis à t = 0 résulte en des fréquences *IF* faibles pour les valeurs de temps de vol $\tau_k$ proches de $\tau_{mix}$. Ces faibles fréquences *IF* sont observées avec de plus larges fenêtres temporelles (la durée de coexistence des échos et du deuxième signal de sortie, égale à $T_{ramp} - \tau_k + \tau_{mix}$, est supérieure à la durée de coexistence des échos et du premier signal de sortie, égale à $T_{ramp} - \tau_k$), limitant les effets de fenêtrage obtenus.

Ce dispositif 100 est donc bien adapté pour capter un ensemble d'échos ayant des temps de vols $\tau_k$ proches d'une valeur donnée de référence $\tau_{mix}$, c'est-à-dire pour observer des objets à des distances $R_k$ proches d'une distance de référence $R_{mix} = c.\tau_{mix}/2$. En choisissant une valeur de $\tau_{mix}$ donnée et des valeurs de fréquences *IF* réduites, le dispositif 100 réalise une mesure de distance sur une zone ou région spécifique de la scène. En connaissant *α priori* les zones de la scène effectivement occupées par des réflecteurs, le dispositif 100 permet de réaliser et répéter des mesures à base de chirps courts, à basse fréquence d'échantillonnage et sans effets de fenêtrage temporel.

Pour des applications de courte portée, par exemple de l'ordre de la dizaine de mètres, la valeur de $\tau_{mix}$ pourra être choisie comme étant non nulle et inférieure à 100 ns.

Il convient de remarquer que les premier et deuxième générateurs 107, 123 ont des bruits de phase décorrélés.

Ce fonctionnement du dispositif 100 nécessite des connaissances *α priori* sur les temps de vol $\tau_k$ à mesurer afin de choisir les retards $\tau_{mix}$ les plus adaptés possible à la scène. Le dispositif 100 peut être utilisé pour réaliser une séquence de mesures, la première servant à déterminer une occupation grossière de la scène, à basse résolution spatiale. Cette première étape permet la construction d'*α priori* sur les zones dans l'espace manifestant de la présence d'énergie (interprétée par le radar comme une présence de réflecteur). Les mesures suivantes, dites de « focusing », peuvent servir à « zoomer » sur les cibles pré-détectées avec une résolution maximale et un grand SNR, pour permettre des applications de suivi d'objet (ou « tracking ») par mesures à chirp courts, et donc à basse consommation d'énergie, et sur lesquelles un suivi de la phase sera effectué pour adresser des applications de détection de faibles mouvements.

Un procédé d'observation mis en œuvre en utilisant le dispositif 100 est décrit ci-dessous.

Afin de déterminer quelles valeurs choisir pour les retards $\tau_{mix}$, une observation de toute la scène à observer est réalisée au cours d'une première étape de mesure. On réalise pour cela une mesure équivalente à une mesure FMCW standard faisant appel à un chirp d'émission et un chirp de référence utilisé dans le mélangeur 124 générés en même temps, c'est-à-dire avec $\tau_{mix} = 0$. Pour ne pas utiliser le convertisseur 130 à forte cadence d'échantillonnage et avoir un bon contrôle du SNR, les éléments du dispositif 100 (les filtres 126 et 128 dans le cas présent) sont configurés pour que les fréquences *IF* à mesurer restent dans une bande d'acquisition $B_{aeq}$ de quelques MHz seulement. Cette bande $B_{aeq}$ est déterminée par l'équation suivante :

$$B_{acq} = 2 \cdot \frac{B_1}{T_{ramp,1}} \cdot \tau_{max} = 2 \cdot \frac{B_1}{T_{ramp,1}} \cdot \frac{2 \cdot R_{max}}{c}$$

avec :

$\tau_{max}$ correspondant au temps de vol associé à la portée désirée $R_{max}$ du dispositif 100 ;
$B_1$ la bande de fréquence balayée par le chirp (les premier et deuxième signaux radar) généré par le dispositif 100 ;

$T_{ramp,1}$ la durée de balayage de la bande $B_1$.

L'association des filtres 126 et 128 forme un filtre passe-bande à fréquences de coupure variables rendant possible d'ajuster, pour chaque mesure, la valeur de la bande dans laquelle les signaux radar seront observés et de filtrer le bruit en dehors de cette bande.

Pour limiter la valeur de cette bande $B_{acq}$, il est possible de réduire la bande $B_1$ du chirp utilisé à cette première étape et/ou augmenter sa durée $T_{ramp,1}$. Cette réduction de la bande $B_{aeq}$ limitera la résolution spatiale de la mesure réalisée. Cette première mesure ne correspondra donc pas à une mesure à haute résolution de la scène, mais permettra de détecter quelles zones sont occupées par un ou plusieurs réflecteurs.

La figure 8 représente un exemple de signal obtenu en sortie du convertisseur 130 lors de cette première étape de mesure pour une scène comprenant cinq réflecteurs placés à des distances comprises entre $R_{min}$ = 0 m et $R_{max}$= 15 m. Les traits pointillés visibles sur cette figure représente les positions réelles des cinq réflecteurs. Dans cet exemple, un chirp de durée $T_{ramp,1}$ = 1 μs et de bande passante $B_1$ = 200 MHz est utilisé. La bande d'acquisition correspondante est égale à 40 MHz et le SNR obtenu à $R$ = 15 m est égal à -7,3. Le signal de sortie obtenu témoigne de la présence des réflecteurs, comme le montrent les pics présents autour des positions simulées de chaque objet. Cependant, la faible bande $B_1$ utilisée ne permet pas de distinguer les deux réflecteurs placé aux alentours de R = 7 m. Cette première mesure permet de distinguer quatre zones d'occupations, mais ne permet pas de déterminer combien d'objets sont présents dans chacune de ces zones. Cette première mesure donne donc une première estimation des distances $R_k$ auxquelles se trouvent les réflecteurs dans la scène observée par le dispositif 100. Ainsi, la faible résolution spatiale choisie pour cette première mesure ne permet cependant pas de distinguer si plusieurs objets se trouvent dans un rayon de taille $c/2.B_1$ autour de ces distances $R_k$.

Le tableau ci-dessous indique, pour chacun des cinq réflecteurs utilisés dans l'exemple décrit ci-dessus, sa distance réelle $R_k$ par rapport au dispositif 100 et le temps de vol $\tau_k$ correspondant, la distance estimée $\widehat{R_k}$ de chacun des réflecteurs à partir des fréquences $f_{IF,k}$ mesurées dans le signal de sortie du convertisseur 130 lors de la mise en œuvre de la première étape de mesure et de la relation $f_{IF,k} = -\frac{B_1}{T_{ramp}} \cdot \tau_k = -\frac{B_1}{T_{ramp}} \cdot \frac{2 \cdot R_k}{c}$, et, pour chacun des réflecteurs, le choix du retard $\tau_{mix,k}$ qui sera appliqué à la prochaine étape pour observer plus en détails chacune des zones détectées comme étant occupée par un des réflecteurs et qui est donné par la relation $\tau_{mix,k} = \frac{2\widehat{R_k}}{c} - \frac{1}{2B_2}$. Les fréquences $f_{IF\_k}$ sont par exemple mesurées à partir du signal de sortie du convertisseur 130 qui est échantillonné. Une transformée de Fourier discrète peut être appliquée à ce signal pour séparer ses composantes fréquentielles qui correspondent aux différentes fréquences de battement. Des opérations de détection et d'estimation, par exemple selon l'algorithme CFAR (« Constant False Alarm Rate » en anglais), peuvent ensuite être appliquées au signal fréquentiel pour détecter les pics de fréquences présents dans ce signal.

Tableau 1

| N° réflecteur | Distance réelle $R_k$ | Tps de vol $\tau_k$ | Distance estimée $\widehat{R_k}$ | Retard $\tau_{mix,k}$ calculé |
|---|---|---|---|---|
| 1 | 5,475 m | 36,53 ns | 5,25 m | 32,5 ns |
| 2 | 7,275 m | 48,53 ns | 7,5 m | 47,5 ns |
| 3 | 7,5 m | 50,03 ns | 7,5 m | 47,5 ns |
| 4 | 11,25 m | 75,05 ns | 11,25 m | 72,5 ns |
| 5 | 13,5 m | 90,06 ns | 13,5 m | 87,5 ns |

Plusieurs deuxièmes étapes de mesure sont ensuite mises en œuvre pour observer chacune des zones détectées comme étant occupées lors la première étape de mesure. Ces deuxièmes étapes vont permettre d'identifier les positions des réflecteurs sur la scène en les plaçant sur un axe de distance discrétisé, dont les éléments sont appelés « range bin » et correspond à une gamme de valeurs de distance. La distance séparant les centres de deux range bins consécutifs est déterminée par la bande passante B du chirp utilisé et vaut c/(2.B). Chaque range bin est associé à une fréquence *IF* selon la relation suivante liant toute fréquence *f* à une distance R :

$$R = \frac{c \cdot T_{ramp}}{2 \cdot B} \cdot f$$

En détectant une composante *IF* dans un signal de sortie du dispositif 100, il est possible d'en déduire qu'un réflecteur est présent sur le range bin associé à cette fréquence. Le nombre de range bins observés détermine la gamme des distances surveillées par la mesure, c'est-à-dire la taille de la fenêtre d'observation, et dépend de la bande d'acquisition des fréquences *IF* observées, $B_{acq}$.

La position de cette fenêtre sur l'axe des distances est déterminée par la valeur de $\tau_{mix,k}$. Si une zone d'activité autour du range bin centrée sur une distance $R_k$ est détectée, un chirp qui aura pour but de scanner cette zone de taille $c/(2.B_1)$ centrée sur $R_k$ avec une haute résolution spatiale est envoyé par le dispositif 100. Une valeur de retard $\tau_{mix,k}$ est choisie pour que les fréquences *IF* mesurées soient adaptées à cette zone, selon l'équation :

$$\tau_{mix,k} = \frac{2 \cdot R_k}{c} - \frac{1}{2.B}$$

ce qui permet de concentrer l'observation sur les signaux provenant d'objets placés entre $R_{min} = R_k - \frac{1}{2} \cdot \frac{c}{2B}$ et $R_{max} = R_k + \frac{1}{2} \cdot \frac{c}{2B}$ .

Pour augmenter la résolution spatiale des deuxièmes mesures par rapport à la première mesure, une bande de fréquences $B_2$ supérieure à la bande $B_1$ est choisie pour les nouveaux chirps utilisés pour ces deuxièmes étapes. En conservant la même bande d'acquisition $B_{aeq}$ de fréquence *IF* que pour la précédente mesure, la bande $B_2$ peut être définie telle que :

$$B_{acq} = 2 \cdot \frac{B_1}{T_{Ramp,1}} \cdot \frac{2 \cdot R_{max}}{c} = 2 \cdot \frac{B_2}{T_{Ramp,2}} \cdot \frac{1}{B_1}$$

et donc $B_2 = \frac{B_{acq} \cdot B_1 \cdot T_{ramp,2}}{2}$

Les fréquences IF issues de signaux en dehors de cette zone, plus grandes que la bande d'acquisition $B_{acq}$, sont filtrées par les filtres 126 et 128.

Dans l'exemple précédent où $B_1$ = 200 MHz, en considérant que $T_{ramp,1} = T_{ramp,2}$ = 1 μs, des chirps de bande $B_2$ = 4 GHz sont utilisés. Avec de tels paramètres, la fenêtre de distance observée par le dispositif 100 (c'est-à-dire la différence entre la distance minimale et la distance maximale observable) est de 75 cm. La bande d'acquisition correspondante est égale à 40 MHz et le SNR obtenu à *R* = 15 m est égal à -6,9.

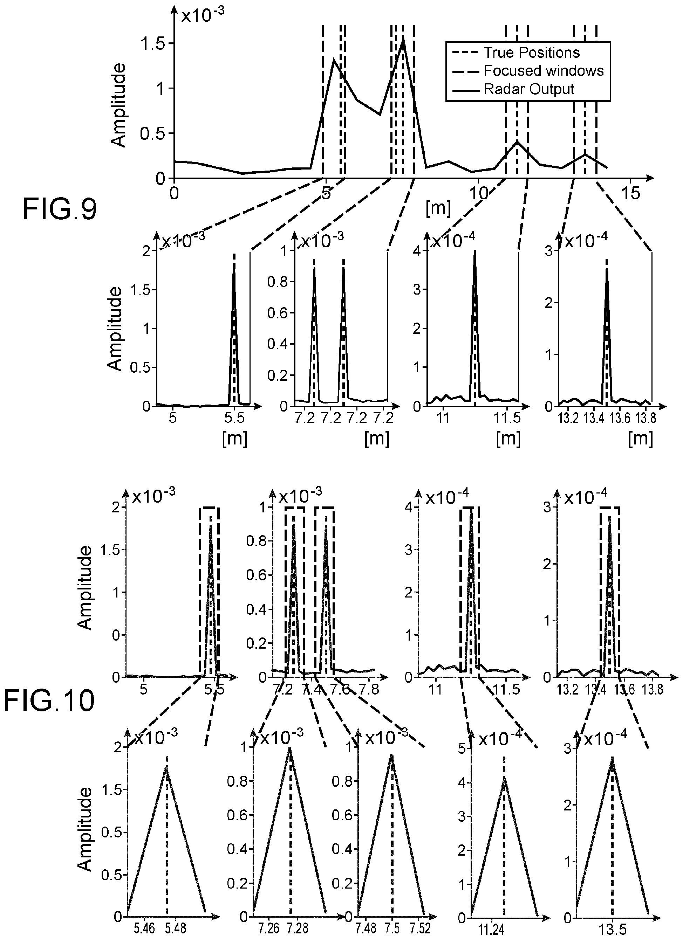

La figure 9 représente les signaux obtenus en sortie du convertisseur 130 lors de ces deuxièmes étapes de mesure. Les quatre courbes visibles sur cette figure correspondent aux signaux obtenus en sortie du convertisseur 130 pour chacun des retards $\tau_{mix,k}$ estimés précédemment. La deuxième de ces quatre courbes montre qu'une résolution spatiale suffisante est obtenue pour distinguer les réflecteurs qui occupaient la zone centrée autour de $R_k$ = 7,5 m.

Une fois ces deuxièmes étapes de mesure réalisées, il est possible de définir une nouvelle fois des valeurs de retard $\tau_{mix}$ pour chaque réflecteur détecté lors de la mise en œuvre des deuxièmes étapes. Il est par exemple possible de réaliser une nouvelle série de mesures afin de focaliser l'observation sur des zones de tailles $c/(2.B_2)$ centrées sur tous les $R_k$ détectés lors des deuxièmes étapes de mesure, avec le maximum de résolution spatial désiré.

Le tableau ci-dessous indique, pour chacun des cinq réflecteurs détectés dans l'exemple décrit ci-dessus, sa distance réelle $R_k$ par rapport au dispositif 100 et le temps de vol $\tau_k$ correspondant, la distance estimée $\widehat{R_k}$ . de chacun des réflecteurs à partir des fréquences $f_{IF,k}$ mesurées dans les signaux de sortie du convertisseur 130 obtenus par la mise en œuvre des deuxièmes étapes de mesure et de la relation :

$$f_{IF,k} = -\frac{B_2}{T_{ramp}} \cdot \tau_k = -\frac{B_2}{T_{ramp}} \cdot \frac{2 \cdot R_k}{c},$$

et, pour chacun des réflecteurs, le choix du retard $\tau_{mix,k}$ qui sera appliqué aux prochaines étapes pour observer plus en détails chacune des zones détectées comme étant occupée par un des réflecteurs et qui est donné par la relation

$$\tau_{mix,k} = \frac{2\widehat{R_k}}{c} - \frac{1}{2B_3}.$$

Tableau 2

| N° réflecteur | Distance réelle $R_k$ | Tps de vol $\tau_k$ | Distance estimée $\widehat{R_k}$ | Retard $\tau_{mix,k}$ calculé |
|---|---|---|---|---|
| 1 | 5,475 m | 36,53 ns | 5,475 m | 36,33 ns |
| 2 | 7,275 m | 48,53 ns | 7,275 m | 48,33 ns |
| 3 | 7,5 m | 50,03 ns | 7,5 m | 49,83 ns |
| 4 | 11,25 m | 75,05 ns | 11,25 m | 74,83 ns |
| 5 | 13,5 m | 90,06 ns | 13,5 m | 89,83 ns |

Pour ces troisièmes étapes de mesure, de nouveaux chirps sont envoyés et les écarts *IF* qu'ils produisent avec des signaux retardés de nouvelles valeurs $\tau_{mix,k}$ sont mesurés. Pour ces troisièmes étapes, une bande passante $B_3$ supérieure à $B_2$ est utilisée pour obtenir une plus haute résolution spatiale. Enfin, les fréquences IF mesurées sont filtrées pour ne visualiser que des zones centrées sur les distances $R_k$ estimées par les précédentes mesures et de taille c/($2.B_3$). Dans l'exemple décrit ici, une bande passante $B_3$ = 6 GHz est choisie, avec $T_{ramp,3}$ = 1 µs. Avec de tels paramètres, la fenêtre de distance observée par le dispositif 100 est de 7,5 cm. La bande d'acquisition correspondante est égale à 6 MHz et le SNR obtenu à R = 15 m est égal à +3,1.

La figure 10 représente les signaux obtenus en sortie du convertisseur 130 lors de ces troisièmes étapes de mesure. Les cinq courbes visibles sur cette figure correspondent aux signaux obtenus en sortie du convertisseur 130 pour chacun des retards $\tau_{mix,k}$ estimés précédemment. La taille des zones observées dans ces troisièmes étapes est très faible, et la bande d'acquisition a été choisie pour ne visualiser que trois range bins différents. Cependant, les étapes de mesures précédentes ont permis de s'assurer qu'aucune cible n'était oubliée : ces troisièmes étapes correspondent à un scan par réflecteur, et le reste de la scène n'est plus observé.

En considérant que chacun des réflecteurs identifiés correspond à un individu sur lequel un suivi de signaux vitaux doit être réalisé, les troisièmes étapes de mesure peuvent alors être répétées à la fréquence $f_{frame}$. ou « Frame Rate », adaptée au suivi réalisé, par exemple comprise entre 1 Hz et 5 Hz dans le cas d'un suivi de rythme cardiaque, ou comprise entre 0,1 Hz et 0,5 Hz dans le cas d'un suivi de rythme respiratoire. La répétition de ces étapes permet d'évaluer les déplacements de chaque réflecteur sur plusieurs secondes. Plus le nombre de réflecteurs est faible, et plus le temps nécessaire pour effectuer ces étapes de mesure est faible. Pour mesurer les faibles variations de distance engendrées par exemple par un battement de cœur ou une respiration, la variation de phase des signaux IF est mesurée. Cette mesure de variation de phase peut être réalisée par traitements numériques. Par exemple, en réalisant une FFT (transformée de Fourier rapide) sur le signal de sortie du convertisseur 130, une représentation de ce signal dans le domaine fréquentiel est obtenue. Il est possible de réaliser ensuite une discrétisation de ce signal en « bins de fréquences » avec un pas 1/$T_{ramp}$ (ou en « range bin »). Si une fréquence *IF* est détectée dans un range bin, la valeur complexe qui lui est associée est lue et il est possible d'en déduire la phase en calculant l'arc tangente de sa partie imaginaire sur sa partie réelle. Ces étapes sont répétées pour toutes les autres fréquences IF présentes dans le spectre de cette même mesure radar. Ces opérations seront répétées à la fréquence $f_{frame}$ pour observer finalement les variations des phases de chacune de ces fréquences *IF* au cours du temps.

Les étapes successives de focalisation permettent de réduire les tailles des fenêtres d'observation de sorte à compenser l'influence de l'augmentation de bande de fréquences B balayée par le chirp sur la bande d'acquisition $B_{acq}$, tout en s'assurant de ne manquer de détecter aucun des réflecteurs présents dans la scène. Les mesures sont focalisées graduellement sur les réflecteurs détectés, en s'assurant de limiter les bandes d'acquisition, et par extension les puissances de bruits. Les étapes finales de mesures, les plus focalisées, seront également celles qui bénéficieront des meilleurs SNR.

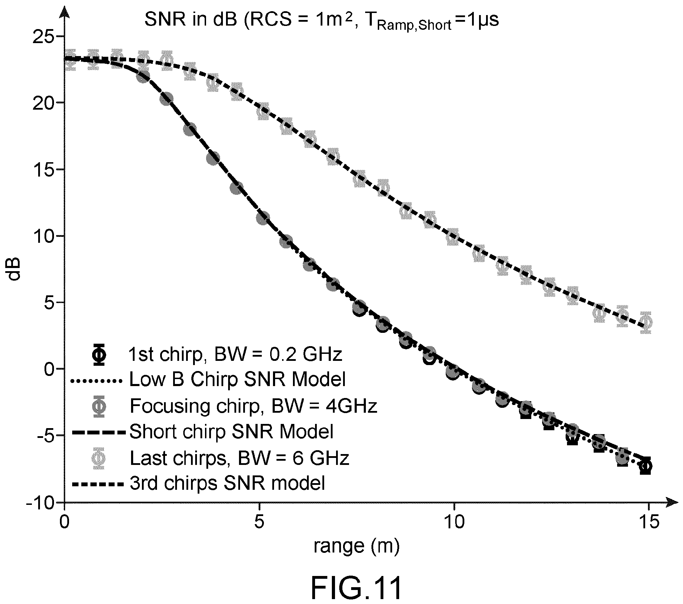

La figure 11 représente les SNR obtenus pour chacune des trois étapes de mesure de l'exemple précédemment décrit.

Les valeurs de SNR sont toutefois ajustables via l'ajustement des bandes d'acquisition de chaque étape de mesure en modifiant les durées *Tramp.* Augmenter cette durée $T_{ramp}$ permet de diminuer les valeurs de $B_{aeq}$ requises, et donc d'augmenter les courbes de SNR. Augmenter les durées $T_{ramp}$ lors des deux premières étapes de mesure d'un certain facteur pourrait ainsi permettre de réduire les bandes d'acquisition de ce même facteur, et donc de multiplier les SNR par ce même facteur. Il est par exemple possible de configurer le dispositif 100 pour répondre à un cahier des charges spécifiant un SNR minimal à observer à la distance $R_{max}$, ce SNR étant usuellement lié à une probabilité de détection de réflecteur par le radar.

Dans cet exemple, les fréquences *IF* sont observées sur 3 range bins. Les valeurs de $\tau_{mix,k}$ ont été choisies afin d'assurer que ces fréquences *IF* soient centrées dans les fenêtres d'observation. Si l'un des réflecteurs venait à se déplacer, on constaterait alors le déplacement de sa fréquence *IF* correspondante hors du centre de sa fenêtre d'observation. En effet, si un réflecteur se rapproche du dispositif 100, alors la fréquence *IF* mesurée va graduellement diminuer. Plus le temps de vol r associée à cette distance diminue et plus il se rapproche de la valeur du retard $\tau_{mix}$ utilisé pour observer ce réflecteur. Cette fréquence finira par changer de range bin et se déplacera en conséquence vers l'extrémité gauche de la fenêtre. Inversement, si le réflecteur s'éloigne du dispositif 100, sa fréquence *IF* associée se déplacera jusqu'à arriver au range bin de la plus grande distance de la fenêtre surveillée. Il faudra alors mettre à jour la valeur de $\tau_{mix}$ qui sert à visualiser cette zone, pour réadapter la fenêtre et la recentrer sur la nouvelle position du réflecteur.

Lorsque le dispositif 100 est utilisé par exemple pour de la surveillance de signes vitaux, les mouvements millimétriques des cages thoraciques des sujets surveillés sont observés à travers les variations de phase des signaux IF associées à ces sujets. Lorsque les mesures sont réalisées sans faire varier les valeurs de $\tau_{mix}$, et que les réflecteurs ne change pas de range bin, les variations de phase observées dans les signaux IF sont bien représentatives des mouvements des sujets surveillés.

Lorsqu'un réflecteur ciblé en mouvement sort de la fenêtre d'observation utilisée, la valeur de $\tau_{mix}$ est modifiée afin de réadapter la fenêtre d'observation pour y recentrer la signature *IF* associée au réflecteur. Ce changement de valeur de $\tau_{mix}$ est réalisé lorsque la fréquence IF devient trop faible (dans le cas d'un rapprochement du réflecteur vis-à-vis du dispositif 100) ou trop grande (dans le cas d'un éloignement du réflecteur vis-à-vis du dispositif 100) et n'est donc plus présente dans la fenêtre observée.

En outre, en choisissant un rapport $f_c/B = K,$ où *K* est un entier supérieur ou égal à 10, il n'est pas nécessaire de réaliser une compensation de phase car l'influence du changement de valeur de de $\tau_{mix}$ sur la phase du signal est négligeable.

En outre, le choix d'un bon SNR permet de s'assurer d'une bonne probabilité de détection.

## Revendications

**1.** Dispositif (100) de mesure radar comportant au moins :

- un premier générateur (107) d'un premier signal radar périodique dont la fréquence varie linéairement, sur au moins une partie $T_{ramp}$ d'une période $T_{in}$, dans une bande de fréquences *B* ;
- une antenne d'émission (110) couplée à une sortie du premier générateur (107) et configurée pour émettre le premier signal radar ;
- un deuxième générateur (123) d'un deuxième signal radar périodique dont la fréquence varie linéairement, sur ladite partie $T_{ramp}$ de la période $T_{in}$, dans la bande de fréquences *B*, qui est généré avec une phase constante ou une même phase de démarrage que le premier signal radar et présentant, par rapport au premier signal radar, un retard paramétrable $\tau_{mix}$;
- une antenne de réception (112) configurée pour recevoir au moins un écho du premier signal radar ;
- un mélangeur (124) comprenant une première entrée couplée à l'antenne de réception (112) et une deuxième entrée couplée à une sortie du deuxième générateur (123).

**2.** Dispositif (100) de mesure radar selon la revendication 1, dans lequel :

- le premier générateur (107) comporte un premier modulateur polaire (132) configuré pour recevoir sur une première entrée un premier signal périodique destiné à être modulé en fréquence, sur une deuxième entrée un premier signal de commande comprenant une suite numérique d'échantillons de fréquences, sur une troisième entrée un signal d'horloge, et pour réaliser une modulation du premier signal périodique par le premier signal de commande à la fréquence du signal d'horloge ;
- le deuxième générateur (123) comporte un deuxième modulateur polaire (136) configuré pour recevoir sur une première entrée le premier signal périodique destiné à être modulé en fréquence, sur une deuxième entrée un deuxième signal de commande comprenant ladite suite numérique d'échantillons de fréquences retardés du retard paramétrable $\tau_{mix}$ égal à un nombre entier de périodes du signal d'horloge, sur une troisième entrée le signal d'horloge, et pour réaliser une modulation du premier signal périodique par le deuxième signal de commande à la fréquence du signal d'horloge.

3. Dispositif (100) de mesure radar selon la revendication 1, dans lequel :

- le premier générateur (107) comporte un premier modulateur cartésien (142) configuré pour recevoir sur une première entrée un premier signal périodique destiné à être modulé en fréquence, sur une deuxième entrée un deuxième signal périodique destiné à être modulé en fréquence et en quadrature avec le premier signal périodique, sur une troisième entrée un premier signal de commande comprenant une première suite numérique d'échantillons de fréquences, sur une quatrième entrée un deuxième signal de commande comprenant une deuxième suite numérique d'échantillons de fréquences, sur une cinquième entrée un signal d'horloge, et pour réaliser une modulation des premier et deuxième signaux périodiques respectivement par les premier et deuxième signaux de commande à la fréquence du signal d'horloge ;
- le deuxième générateur (123) comporte un deuxième modulateur cartésien (146) configuré pour recevoir sur une première entrée le premier signal périodique destiné à être modulé en fréquence, sur une deuxième entrée le deuxième signal périodique destiné à être modulé en fréquence et en quadrature avec le premier signal périodique, sur une troisième entrée un troisième signal de commande comprenant la première suite numérique d'échantillons de fréquences retardés du retard paramétrable $\tau_{mix}$ égal à un nombre entier de périodes du signal d'horloge, sur une quatrième entrée un quatrième signal de commande comprenant la deuxième suite numérique d'échantillons de fréquences retardés du retard paramétrable $\tau_{mix}$, sur une cinquième entrée le signal d'horloge, et pour réaliser une modulation des premier et deuxième signaux périodiques respectivement par les troisième et quatrième signaux de commande à la fréquence du signal d'horloge.

4. Dispositif (100) de mesure radar selon l'une des revendications 2 ou 3, dans lequel une sortie du premier modulateur polaire (132) ou du premier modulateur cartésien (142) est couplée à une entrée d'un premier multiplieur de fréquence (134), le premier signal radar correspondant au signal destiné à être délivré en sortie du premier multiplieur de fréquence (134), et dans lequel une sortie du deuxième modulateur polaire (136) ou du deuxième modulateur cartésien (146) est couplée à une entrée d'un deuxième multiplieur de fréquence (138), le deuxième signal radar correspondant au signal destiné à être délivré en sortie du deuxième multiplieur de fréquence (138).

5. Dispositif (100) de mesure radar selon l'une des revendications précédentes, comportant en outre, couplé à une sortie du mélangeur (124), un filtre passe haut (126) couplé en série à un filtre (128) à gain et fréquence de coupure variables.

6. Dispositif (100) de mesure radar selon l'une des revendications précédentes, comportant en outre un convertisseur analogique - numérique (130) comprenant une entrée couplée à une sortie du filtre (128) à gain et fréquence de coupure variables.

7. Procédé de mesure radar mis en œuvre avec au moins un dispositif (100) de mesure radar selon la revendication 1, comportant au moins :

- choix d'une première valeur du retard paramétrable $\tau_{mix}$, d'une première valeur $B_1$ de la bande de fréquences $B$ et d'une première valeur de $T_{ramp}$;
- première mesure radar mise en œuvre avec le dispositif de mesure radar configuré avec la première valeur du retard paramétrable $\tau_{mix}$ et la première valeur $B_1$.

8. Procédé de mesure radar selon la revendication 7, dans lequel la première valeur du retard paramétrable $\tau_{mix}$ est égale à 0, et/ou dans lequel la première valeur $B_1$ est comprise entre 200 MHz et 2 GHz, et/ou dans lequel la première valeur de $T_{ramp}$ est comprise entre 1 μs et 10 μs.

9. Procédé de mesure radar selon l'une des revendications 7 ou 8, comportant en outre, après la mise en œuvre de la première mesure radar :

- mesure, dans le spectre du signal de sortie du dispositif (100) de mesure radar obtenu lors de la première mesure radar, d'un ou plusieurs pics de fréquence $f_{IF,k}$, k étant un nombre entier supérieur ou égal à 1, chacun représentatif de la présence d'au moins un réflecteur à une distance donnée vis-à-vis du dispositif (100) de mesure radar ;

- calcul, pour le ou chacun des pics de fréquence $f_{IF,k}$, d'une estimation $\widehat{R_k}$ de ladite distance donnée selon l'équation $\widehat{R_k} = -\frac{f_{IF,k} \cdot T_{ramp}}{B_1} \cdot \frac{c}{2}$, avec c correspondant à la vitesse de la lumière dans le vide ;
- choix d'une deuxième valeur $B_2 > B_1$ de la bande de fréquences $B$ ;
- calcul d'une ou plusieurs deuxièmes valeurs $\tau_{mix,k}$ du retard paramétrable $\tau_{mix}$ selon l'équation $\tau_{mix,k} = \frac{2\widehat{R_k}}{c} - \frac{1}{2B_2}$ ;
- une ou plusieurs deuxièmes mesures radar chacune mise en œuvre avec le dispositif (100) de mesure radar configuré avec la ou l'une des deuxièmes valeurs $\tau_{mix,k}$ et la deuxième valeur $B_2$.

10. Procédé de mesure radar selon la revendication 9, dans lequel la deuxième valeur $B_2$ est comprise entre 2 GHz et 4 GHz.

11. Procédé de mesure radar selon l'une des revendications 9 ou 10, comportant en outre, après la mise en œuvre de la ou des deuxièmes mesures radar :

- mesure, dans le spectre du ou de chaque signal de sortie du dispositif de mesure radar obtenu lors de la ou de chacune des deuxièmes mesures radar, d'un ou plusieurs pics de fréquence $f_{IF,k}$ ;
- calcul, pour le ou chacun des pics de fréquence $f_{IF,k}$, d'une estimation $\widehat{R_k}$ de ladite distance donnée selon l'équation $\widehat{R_k} = -\frac{f_{IF,k} \cdot T_{ramp}}{B_2} \cdot \frac{c}{2}$
- choix d'une troisième valeur $B_3 > B_2$ de la bande de fréquences $B$ ;
- calcul d'une ou plusieurs troisièmes valeurs de retards $\tau_{mix,k}$ du retard paramétrable $\tau_{mix}$ selon l'équation $\tau_{mix,k} = \frac{2\widehat{R_k}}{c} - \frac{1}{2B_3}$ ;
- une ou plusieurs troisièmes mesures radar chacune mise en œuvre avec le dispositif (100) de mesure radar configuré avec la ou l'une des troisièmes valeurs de retard $\tau_{mix,k}$ et la troisième valeur $B_3$.

12. Procédé de mesure radar selon la revendication 11, dans lequel la troisième valeur $B_3$ est comprise entre 4 GHz et 6 GHz.

13. Procédé de mesure radar selon l'une des revendications 9 à 12, dans lequel la ou les deuxièmes mesures radar, ou la ou les troisièmes mesures radar, sont répétées à une fréquence comprise entre 1 Hz et 5 Hz dans le cas d'un procédé mise en œuvre pour suivre un rythme cardiaque, ou comprise entre 0,1 Hz et 0,5 Hz dans le cas d'un procédé mis en œuvre pour suivre un rythme respiratoire.

amplitude

temps

$T_{Ramp}$

fréquence

$f_c + B/2$

$f_c$

$f_c - B/2$

IF

B

10

12

temps

$\tau = 2 \cdot R/c$

$T_{Ramp}$

FIG.1

T

$T_{ON}$

$T_{OFF}$

$f_c + \dfrac{B}{2}$

$f_c$

$f_c - \dfrac{B}{2}$

$\begin{cases} IF_1 \\ \phi_1 \end{cases}$

$\begin{cases} IF_2 \\ \phi_2 \end{cases}$

$\begin{cases} IF_3 \\ \phi_3 \end{cases}$

$\tau$

$\tau$

$\tau$

0

$T_{ramp}$

$\dfrac{1}{f_{frame}}$

$\dfrac{2}{f_{frame}}$

t

FIG.2

FIG.3

FIG.4

FIG.5

FIG.6

FIG.7

FIG.8

FIG.9

FIG.10

FIG.11

Europäisches
Patentamt

European
Patent Office

Office européen
des brevets

**RAPPORT DE RECHERCHE EUROPEENNE**

Numéro de la demande

**EP 22 18 6571**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2021/165088 A1 (SUZUKI TAKUYA [JP]) 3 juin 2021 (2021-06-03) * alinéa [0049]; figure 4 * ----- | 1-13 | INV. G01S13/34 G01S7/35 |
| A | US 2021/173069 A1 (WU RYAN HAOYUN [US] ET AL) 10 juin 2021 (2021-06-10) * figure 1 * ----- | 5 | ADD. G01S7/41 G01S13/40 G01S13/70 |
| A | US 2021/181328 A1 (HAYASHI JOJI [JP]) 17 juin 2021 (2021-06-17) * alinéa [0027]; figures 3, 5A, 5B * ----- | 8-13 | |

**DOMAINES TECHNIQUES RECHERCHES (IPC)**

G01S

Le présent rapport a été établi pour toutes les revendications

| Lieu de la recherche | Date d'achèvement de la recherche | Examinateur |
|---|---|---|
| Munich | 29 novembre 2022 | Ferrara, Michele |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
................................................................
& : membre de la même famille, document correspondant

EPO FORM 1503 03.82 (P04C02)

**EP 4 124 886 A1**

## ANNEXE AU RAPPORT DE RECHERCHE EUROPEENNE
## RELATIF A LA DEMANDE DE BREVET EUROPEEN NO.

EP 22 18 6571

29-11-2022

| Document brevet cité au rapport de recherche | Date de publication | Membre(s) de la famille de brevet(s) | Date de publication |
|---|---|---|---|
| US 2021165088 A1 | 03-06-2021 | CN 112219128 A | 12-01-2021 |
| | | DE 112018007697 T5 | 11-03-2021 |
| | | JP 7069309 B2 | 17-05-2022 |
| | | JP WO2019234946 A1 | 03-06-2021 |
| | | US 2021165088 A1 | 03-06-2021 |
| | | WO 2019234946 A1 | 12-12-2019 |
| US 2021173069 A1 | 10-06-2021 | EP 3835809 A1 | 16-06-2021 |
| | | US 2021173069 A1 | 10-06-2021 |
| US 2021181328 A1 | 17-06-2021 | CN 112639520 A | 09-04-2021 |
| | | JP WO2020049648 A1 | 12-08-2021 |
| | | US 2021181328 A1 | 17-06-2021 |
| | | WO 2020049648 A1 | 12-03-2020 |

EPO FORM P0460

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3100404 A1

- FR 3086132 A1

**Littérature non-brevet citée dans la description**

- **D. GUERMANDI et al.** A 79GHz 2x2 MIMO PMCW radar SoC in 28nm CMOS. *2016 IEEE Asian Solid-State Circuits Conférence (A-SSCC),* 2016, 105-108